Europäisches Patentamt

European Patent Office

Office européen des brevets

(11) Publication number: **0 483 383 A1**

## EUROPEAN PATENT APPLICATION
## published in accordance with Art. 158(3) EPC

(21) Application number: 91909369.0

(22) Date of filing: 17.05.91

(86) International application number:
PCT/JP91/00663

(87) International publication number:
WO 91/18258 (28.11.91 91/27)

(51) Int. Cl.5: **G01B 11/00, G01C 15/00, G01C 15/06**

(30) Priority: 19.05.90 JP 129588/90
19.05.90 JP 1295/89
12.07.90 JP 185044/90

(43) Date of publication of application:
06.05.92 Bulletin 92/19

(84) Designated Contracting States:
CH DE GB LI

(71) Applicant: KABUSHIKI KAISHA TOPCON
75-1, Hasunuma-cho Itabashi-ku
Tokyo 174(JP)

(72) Inventor: ISAWA, Nobuo, T5-1, Hasunuma-cho
Itabashi-ku
Tokyo 174(JP)

Inventor: SAKIMURA, Ritsuo, 75-1,
Hasunuma-cho
Itabashi-ku
Tokyo 174(JP)
Inventor: KATSUME, Keikoku, 75-1,
Hasunuma-cho
Itabashi-ku
Tokyo 174(JP)

(74) Representative: Altenburg, Udo, Dipl.-Phys. et
al
Patent- und Rechtsanwälte
Bardehle-Pagenberg-Dost-Altenburg
Frohwitter-Geissler & Partner Postfach 86 06
20
W-8000 München 80(DE)

(54) METHOD OF TRIDIMENSIONAL MEASURING, REFERENCE SCALE AND SELF-ILLUMINATING REFERENCE SCALE FOR TRIDIMENSIONAL MEASURING.

(57) According to the present invention, an observing machine is set at an observing point and collimation targets are disposed at three fixed points. By collimating the three fixed points from the observing machine, horizontal angles and height angles of three types are measured, respectively, and equations of error about the horizontal angles, height angles, distances between the three fixed points and straightnesses between the fixed points are established from these observed data. First, approximate values are obtained from the observed data, and further, by utilizing the method of least squares, the positions of the respective points can be obtained in details. Furthermore, by collimating the three fixed points and points to be sought from the observing machine, the horizontal angles and the height angles of three types are measured, respectively, so that the positions of the points can be obtained in details. Further, by forming three targets on a subtense bar at predetermined distances, at least the positions of the points can be obtained from the observation of the distances between the three points. Furthermore, by setting the observing machine at a known observing point and by positioning a measuring portion specified by the three fixed points at the point to be sought, collimation targets can be disposed at the three fixed points. By collimating the three fixed points from the observing machine, the positions of the three fixed points can be obtained in details. Further, by forming a measuring end portion at the forward end portion of a reference scale, a position of the measuring point can be obtained even when the

EP 0 483 383 A1

measuring point cannot be directly observed from the outside. Furthermore, since a plurality of targets are formed of photoconductive optical material such that the internal light is emitted as a diffused flux of light, collimation can be easily performed even in a relatively dark place.

# F I G . 2

$S_1(X_1, Y_1, Z_1)$

$S_2(X_2, Y_2, Z_2)$

$Y_2' = O(known)$  $S_3(X_3, Y_3, Z_3)$

$T_1$ : theodlite (known)
$(O, O, O)$

### Field of the Invention

The present invention relates to a three-dimensional measurement method for measuring shapes and sizes of large constructions and etc. and in particular to the three-dimensional measurement method and a three-dimensional measurement reference ruler, respectively enabling to carry out effectively and precisely measurements with a usage of only one theodlite. In more particular, the present invention relates to the three-dimensional reference ruler and the three-dimensional measurement method enabling to measure and survey easily and precisely even in case that a measurement point (target point) is not seen directly from the outside of the large structure to be measured. Further, it relates to a self-illumination type reference ruler enabling to collimate easily even in a place of relatively dark.

### Background of the Invention

Nowadays, a system using at least two theodlite to measure shapes and sizes of large constructions to be measured has been developed. According to the conventional measurement system, at least two surveying apparatuses (transits) are used and the target points are determined by using known points and two procedures. The surveying procedures are described below.

(a) First, a Surveying point is Determined by Reference point

A subtense bar provided with targets at its ends is placed horizontally on the reference or standard point. The reason for horizontally arranging the subtense bar is to simplify a calculation for determing positions of surveying points. Two transits are installed at two surveying points or measurement points. Then, a collimation is carried out from a first transit to three points of both ends of the horizontally arranged subtense bar and a second transit situated at a second measurement point in order to measure horizontal angles and altitude angles.

Next, another collimation is carried out from the second transit to three points of both ends of the horizontal subtense bar and the first transit placed at a first measurement point in order to measure horizontal angles and altitude angles.

Using the position of the reference point and the surveying data obtained as described above, coordinates of the first and the second surveying points are determined by a geometrical process.

(b) The Target point is Determined.

After the transits are placed at the coordinates of the first and the second measurement points formed by calculation of the process (a) above, a collimation is carried out from the first transit to the target point in order to measure horizontal angles and altitude angles.

Next, a collimation is carried out from the second transit to the target point and horizontal angles and altitude angles are measured.

At last, using data of positions of these first and the second measurement points and the measurement data, the coordinates of the target point have been geometrically determined.

According to the conventional measurement method above, however, because the measurement point position is once determined from the reference point, then the target point is determined from the measurement point position determined, there is a problem of decreasing precision due to additional measurement errors of these two steps.

In addition, because there are two positions of measurement and surveilance, it is necessary to carry out a simultaneous measurement so as to decrease any error in the operation or steps. As a result, it causes the operation difficult and troublesome.

And the object of collimation of the measurement point is a transit, so it is difficult to collimate the transit and apt to contain some collimation errors.

It is other disadvantage of the prior art to position the subtense bar horizontally resulting in restriction on a choice of the working place or location.

According to the conventional process of the measurement, a measurement of the measurement point (target point) which is not able to be directly collimated from the outside has been carried out by the steps shown below.

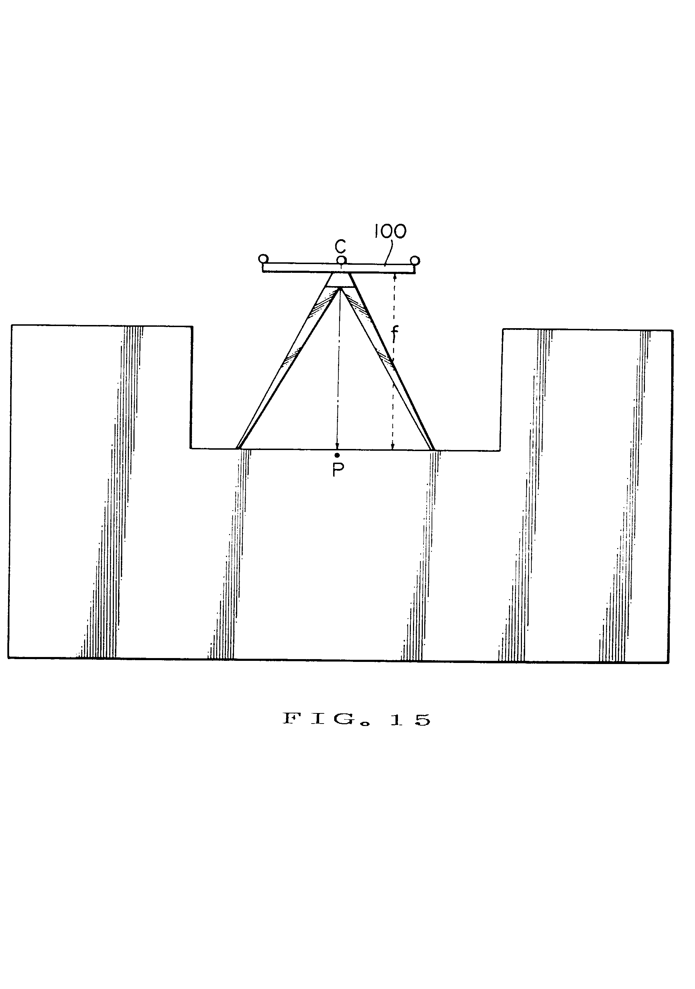

First, as shown in FIG 15, a reference or standard ruler 100 is securely placed on a position by a tripod or the like so as to be collimated from the outside. At this time, it is necessary to make the center C of the reference ruler 100 corresponds to the measurement point or a target point P. Collimation targets at both ends of the reference ruler 100 are collimated in order to determine a distance from a point of the measurement tool to the center C of the reference ruler 100, and a height f from the measurement point (target point) P to the center C. The three-dimensional coordinates are determined by using the following equations.

$$Xc = S \cdot Cos (H)$$
$$Yc = S \cdot Sin (H)$$
$$Zc = S \cdot Sin (V) - f$$

Wherein H is a directional angle and V is an altitude angle.

On the contrary, when it is necessary to measure a measurement point (target point) which is not able to be directly collimated according to the prior art, the coordinates of the measurement point (target point) are determined by using coordinates of the center C of the standard ruler 100, which is a position calculated and determined by the equations above. Consequently it is not easy to solve the problem of error in centering. Further, a measurement of the altitude has a trouble of measurement error concerning a height f from the measurement point (target point) P to the reference ruler 100.

According to the conventional measurement method, it is necessary to position the reference ruler 100 horizontally and to confront the reference ruler 100 to the reference tool or machine, causing a precise installement of the reference ruler 100 difficult and a choosing range of the installation places restricted.

According to the prior art, surveilance or measurement works mainly are carried out in the outside, so there is no problem that the target is difficult to collimate because sufficient sunshine can be obtained around the target point.

The measurement process using a recent reference ruler is employed when sizes of large constructions, such as ships and airplanes are measured in a room or shelter. According to such measurement operation, the distances to be measured are relatively short and a range of measurement direction is wide. As a result, it is necessary to decrease the collimation error of such measurement operation. A proposal to use a bulb shape in order to decrease collimation error has been done.

The reference ruler provided with bulb shape targets has effect decreasing collimation error, however, it hasn't sufficient brightness or illumination around the bulb shape targets when the reference ruler functions in a room of a brightness of relatively low causing a collimation of the targets difficult. That is, when light beams from a lamp and the like shine the front of the reference ruler, it is difficult to correctly know the profile of the bulb or globe shape target.

Summary of the Invention

According to the phase of the present invention, a measurement apparatus or tool is installed at a measurement point and collimation targets are positioned at three fixed points. Collimating these three fixed point through the measurement or surveying apparatus measures three kinds of horizontal angles and altitude angles. In addition, the measurement data of these angles generate an equation on error of horizontal angles, altitude angles, distance between three fixed points, and a straightness of lines among three fixed points. First, an approximate value is determined from the surveilance data, and then it is possible to precisely determine positions of respective points by using the method of least squares.

According to another aspect of the present invention, the measurement apparatus is placed at the measurement point and collimation targets are arranged on three fixed points. By carrying out a collimation from the measurement apparatus to the three fixed points and the target point, respective three kinds of horizontal angles and altitude angles are measured. Furthermore, using these measurement data erects error equations concerning the horizontal angles, altitude angles, distances between three fixed points, and straightness of lines between these fixed points. First, an approximate value is determined from these measurement data and then, using the method of lease sequares can determined precisely the positions of respective points above. Also, it is possible to survey the fixed points to determine the positions of measurement points, then survey the target points.

According to the present invention, forming three targets separated at a predetermined interval on the subtense bar enables to determine positions of respective points from results of surveylance among at least three points.

Also, the present invention enables to make the shape of three targets global or spherical.

The present invention sets a measurement apparatus at a known measurement points, a measurement portion of the surveilance apparatus specified by these three fixed points is placed at the target point, and thus collimation targets are situated at three fixed points. By carrying out a collimation from the surveilance

<div align="center">4</div>

or measurement apparatus to three fixed points, respective three kinds of horizontal angles and altitude angles are measured. Further, using these measurement data forms error equations of the horizontal angle, altitude angle, distance among the three fixed points, and straightness of lines between these fixed points. These measurement data determines first the approximate value, and then the method of least sequares correctly determines positions of three fixed points. In addition, these three fixed point's positions determine the position of the measurement portion, so that it is possible to determine the position of the target point.

According to another aspect of the present invention, the measurement apparatus sets at the surveilance point and the measurement portion specified by three fixed points is placed at the target point, thus the collimation targets are placed at the three fixed points. Carrying out a collimation from the surveylance machine to these three fixed points enables to measure respective three kinds of horizontal angles and altitude angles. Further, using such measurement data erects error equations of horizontal angles, altitude angles, distance among the three fixed points, and a straightness of lines among the three fixed points. First an approximate value is determined from the measurement data and then positions of respective points are precisely determined by using the method of least sequares. Determining the position of the measurement portion from the three fixed positions determined enables to determine the position of the target point.

According to one of the aspects of the present invention, three fixed points (collimation target) are formed on the reference ruler at a predetermined interval and a measurement end portion for determining the position of the reference ruler relative to the measurement point (target point) is formed at end portions of the reference ruler, thus it is possible to determine the positions of three fixed points from the result of measurement among at least three points and further determine the position of the measurement point (target point) from the position of the fixed point.

Furthermore, the idea of the present invention enables to determine the position of the measurement point (target point) after the main body of the reference ruler is secured to a fixing device such as a tripod and the like, and measurement end portions placed on the same straight line as that of the three fixed points (collimation target) is placed at the measurement point (target point).

The plurality of the targets are made of light conductive material for ejecting inner light as a diffused light bundle. The targets are supported on the reference ruler by a supporting portion at a predetermined interval and the light conductive member conducts light beam from a light source to the targets.

It is possible also to place the light conductive member in the supporting portion.

Brief Description of the Drawing

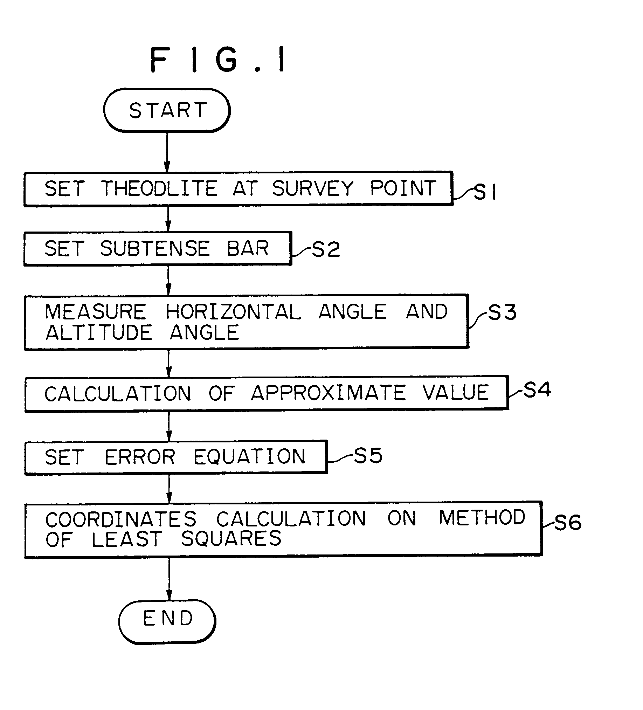

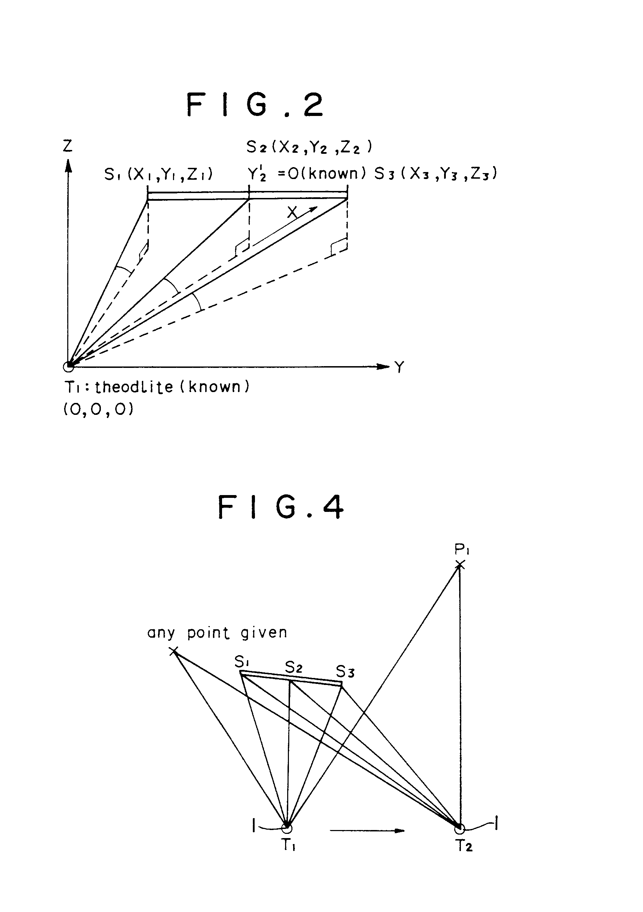

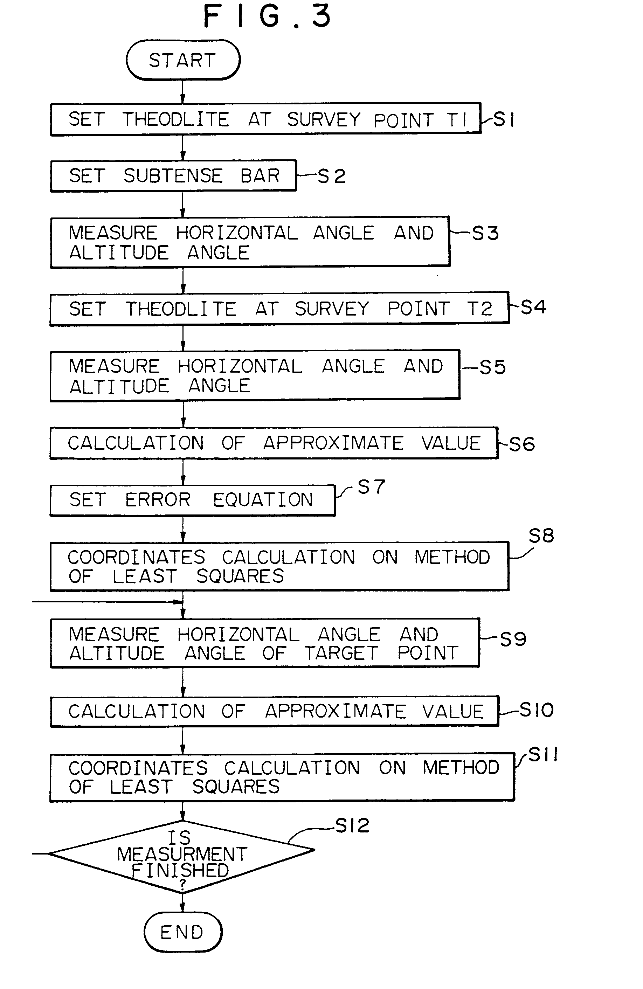

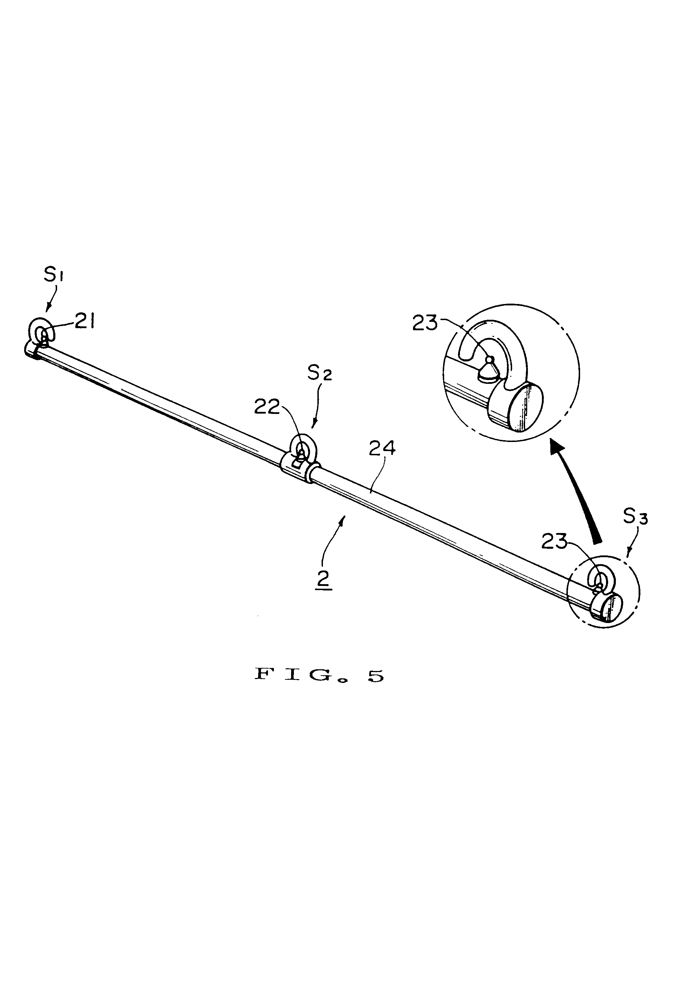

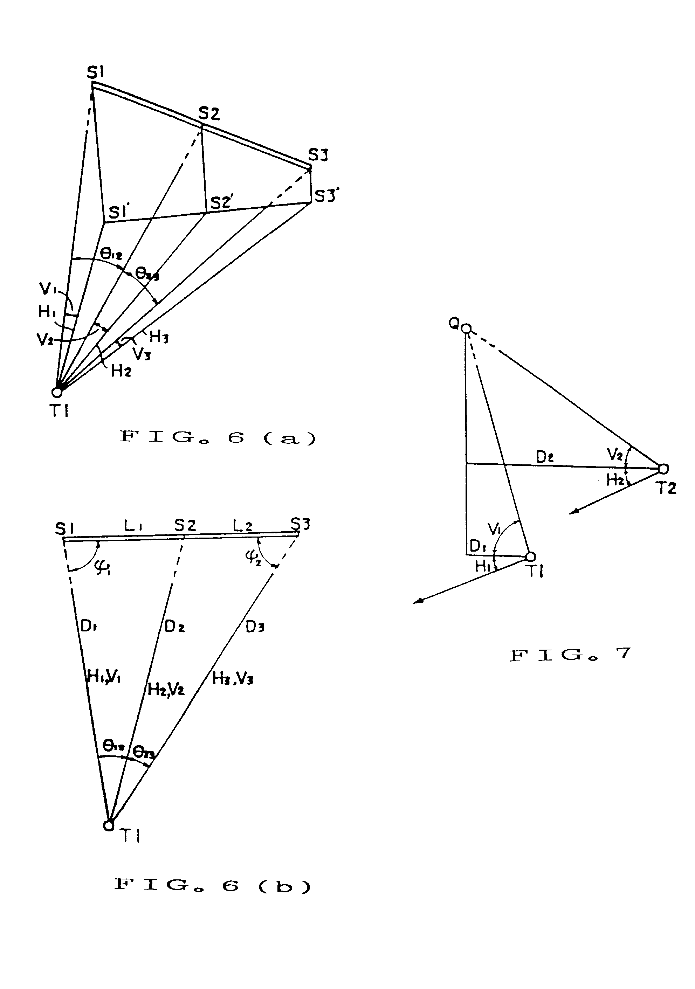

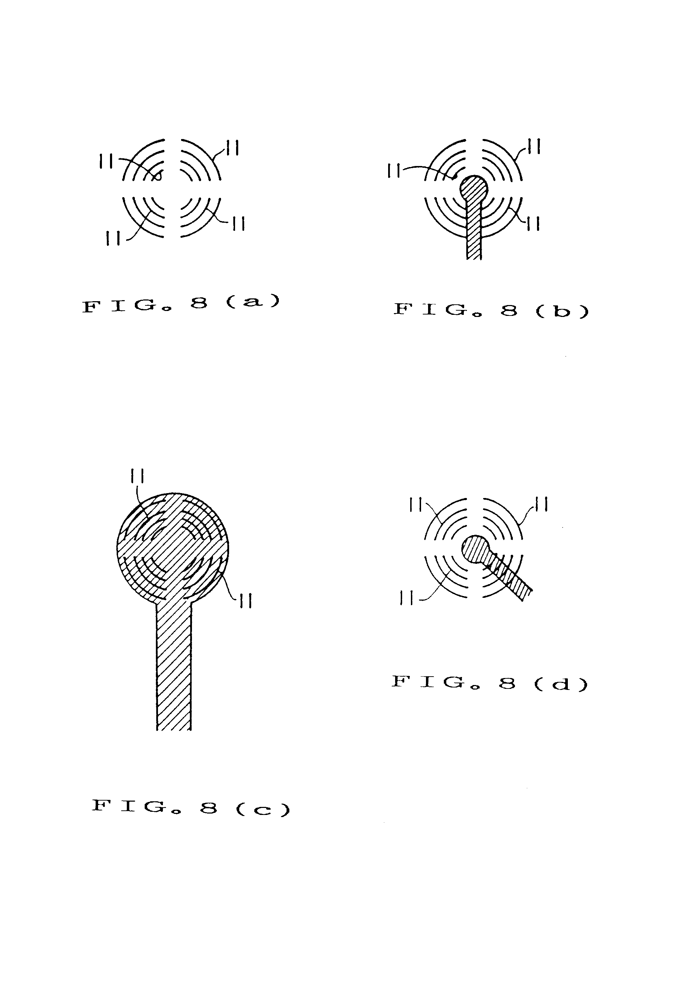

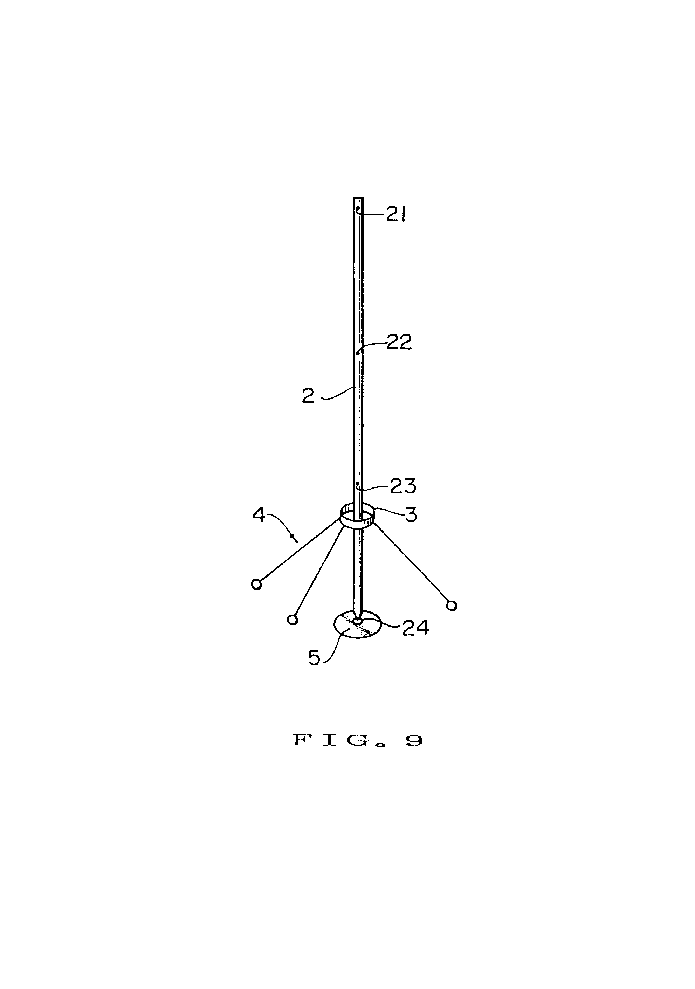

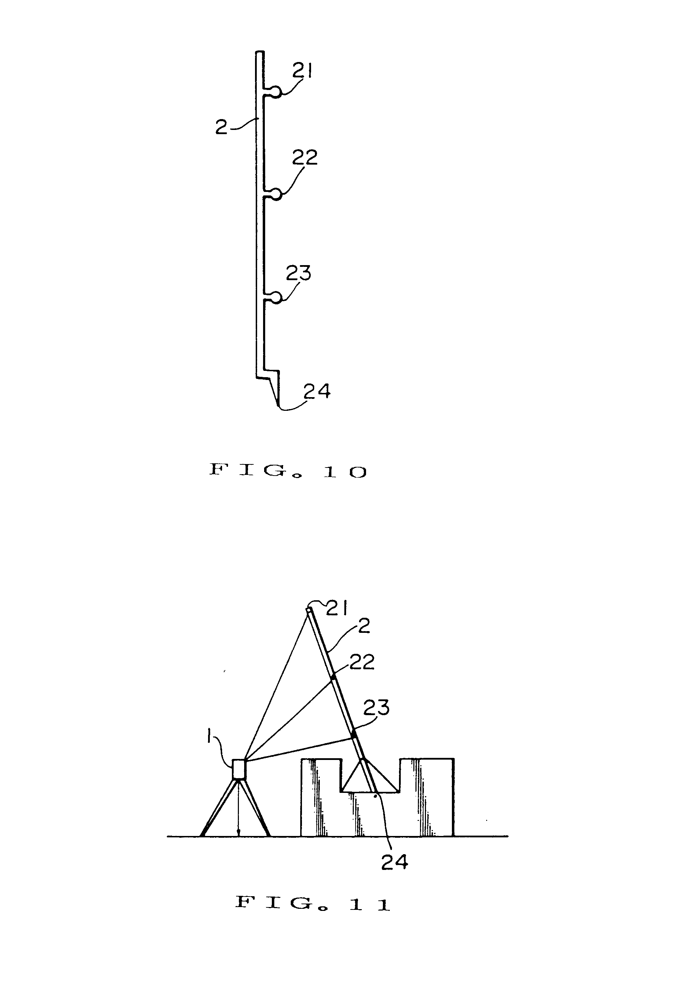

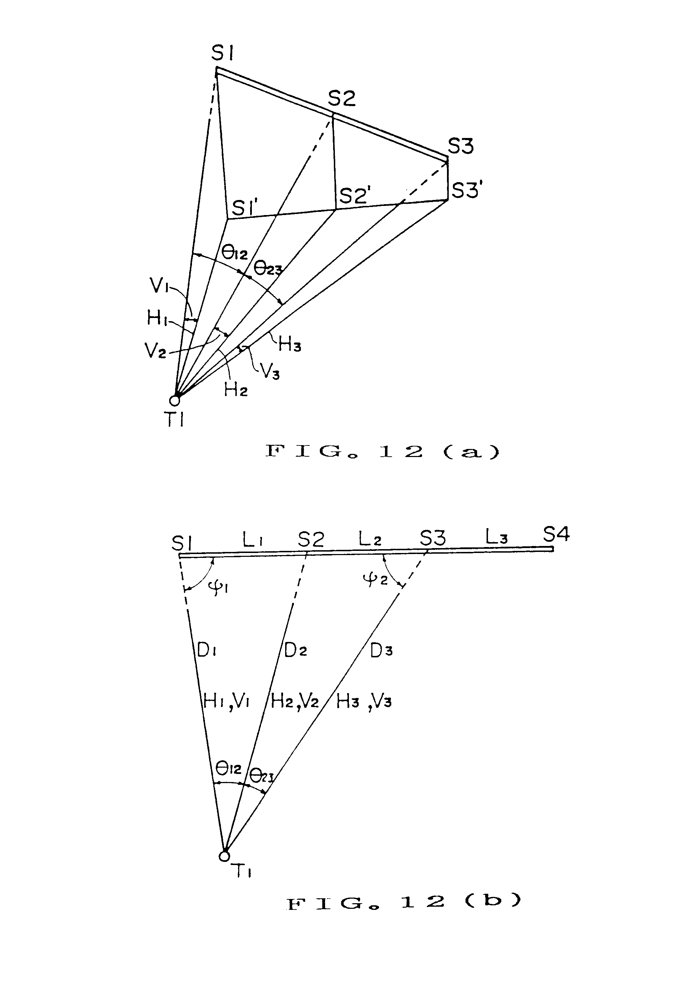

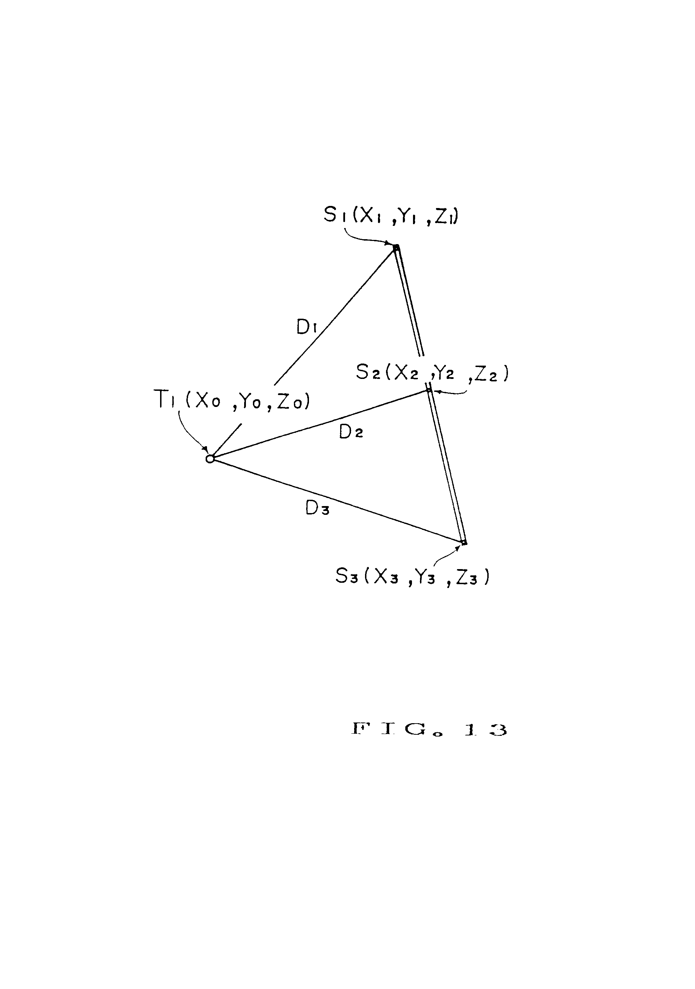

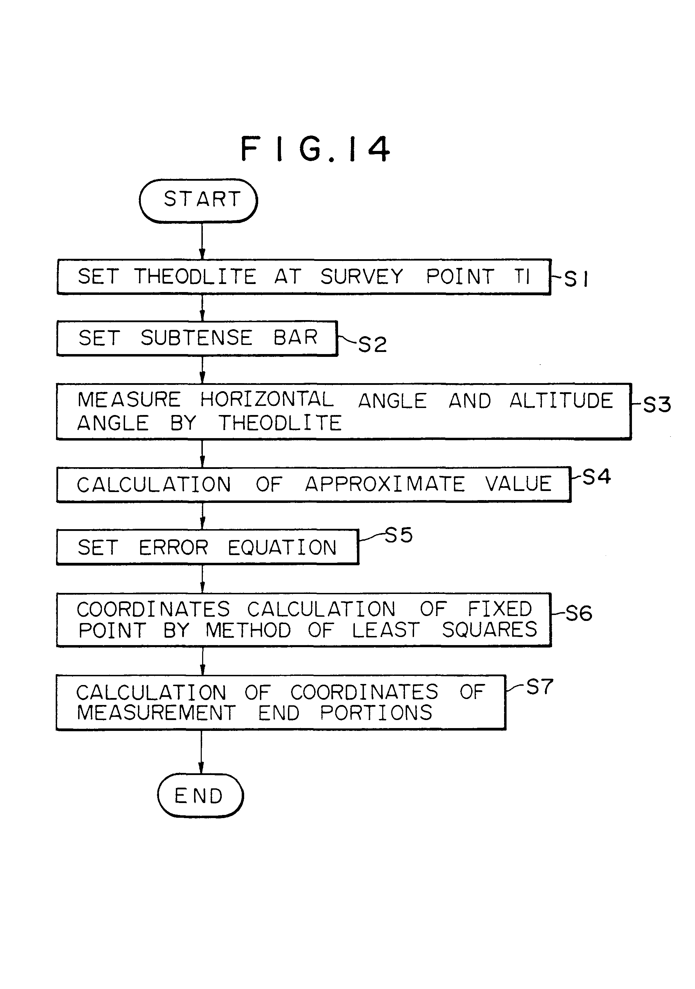

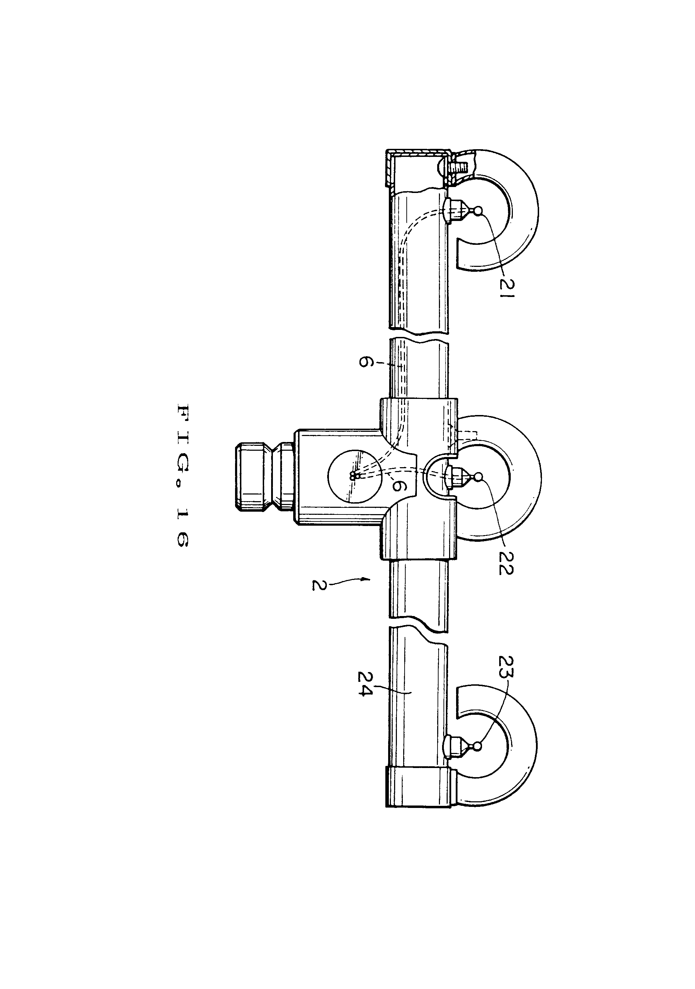

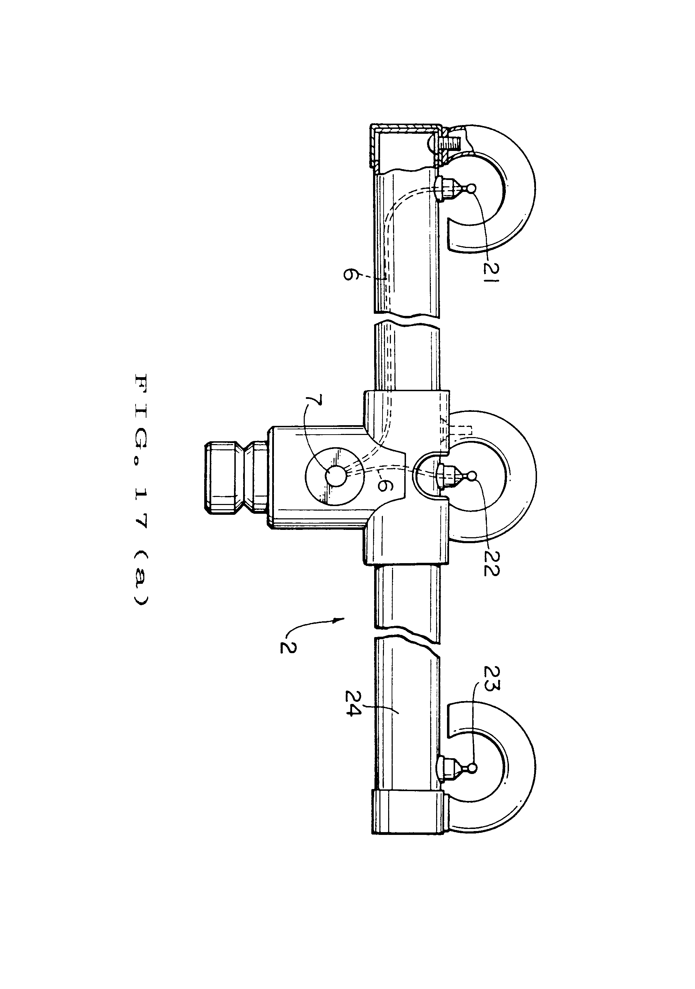

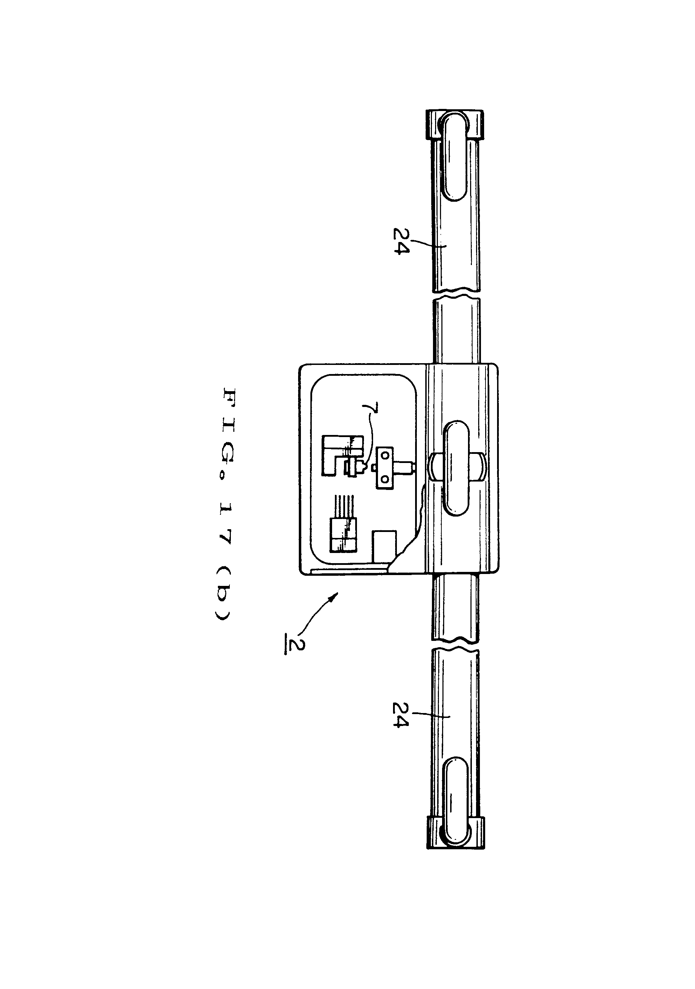

FIG 1 is an explanation for a construction of the basic principle of the first embodiment according to the present invention; FIG 2 is a coordinates system for explaining the basic principle; FIG 3 is an explanation of a construction of an applied measurement of the first embodiment; FIG 4 is an explanation of the applied measurement; FIG 5 is an explanation of the subtense bar; FIG 6 and FIG 7, respectively are explanations of calculation method of approximate value; FIG 8 is an explanation of reticle of a theodlite; FIG 9 and FIG 10, respectively are explanations of a subtense bar used to measure a measurement point which is not enable to directly collimate from the outside; FIG 11 is an explanation for a usage condition of the subtense bar; FIG 12 is an explanation for a calculation method of approximates; FIG 13 is an explanation for the coordinates obtained when it doesn't directly collimate; FIG 14 is an explanation for an embodiment of a case when it doesn't directly collimate; FIG 15 is an explanation for a conventional measurement method of the measurement point which is not directly collimated from the outside; FIG 16 is an explanation for a construction of the first embodiment of the self-illumination type reference ruler; FIG 17(a) is an explanation for a construction of the light source according to the second embodiment above; FIG 18 is an explanation for the construction of the second embodiment according to the present invention.

Preferred Embodiments of the Invention

Embodiments of the present invention will be explained with reference to the drawing.

According to the present invention, other several numeral values having particular relationship to respective independent unknown values are directly measured and the measured values are used to indirectly determine unknonw values.

Here, X, Y, Z ... T are unknown values and $M_1$, $M_2$ ... Mn are values directly measured, so unknown values are calculated by the following relation equations.

$$M_1 = f_1 (X, Y, Z, \ldots T)$$

$$M_2 = f_2 (X, Y, Z, \ldots T)$$

$$\cdot \qquad \cdot$$

$$\cdot \qquad \cdot$$

$$\cdot \qquad \cdot$$

$$Mn = fn (X, Y, Z, \ldots T) \qquad\qquad \ldots\ldots(1)$$

The equation (1) above is called an error equation (surveilance equation). When X is a true value, X' is an approximate value, X is a supplemental value, the following equation is obatined.

$$X = x' + x \qquad\qquad \text{similarly, they are attained.}$$

$$Y = y' + y$$

$$\cdot \qquad \cdot$$

$$\cdot \qquad \cdot$$

$$\cdot \qquad \cdot$$

$$T = t' + t \qquad\qquad\qquad \ldots\ldots(2)$$

The first equation can be written as shown below using the second equation.

$$f_i (X, Y, Z, \ldots T)$$

$$= f_i (x' + x, y' + y, z' + z \ldots t' + t)$$

$$(i = 1 \ldots n) \quad \ldots\ldots(3)$$

The third equation above is calculated by Taylor expansion and term of second degree and the less than it are cancelled (linearlized),so the following equations are obtained.

$$f_i(x' + x, \ y' + y, \ z' + z \cdots t' + t)$$

$$\fallingdotseq f_i(x', \ y', \ z' \cdots t')$$

$$+\frac{\partial f_i}{\partial x'} x + \frac{\partial f_i}{\partial y'} y + \frac{\partial f_i}{\partial z'} z \cdots\cdots\cdots +\frac{\partial f_i}{\partial t'} t$$

$$\cdots\cdots (4)$$

Wherein $M_i' = f_i(x', y', z', \dots t')$

$$\frac{\partial f_i}{\partial x'} = a_i, \quad \frac{\partial f_i}{\partial y'} = b_i, \quad \frac{\partial f_i}{\partial z'} = c_i$$

$$\cdots\cdots (5)$$

and

$$M_i = M_i' + a_i x + b_i y + c_i z \qquad (6)$$

are obtained.

According to the present invention, approximate values determined by a geometric method are substituted into x', y', z' .... t' (approximate values) and x, y, z .... t of supplemental values are determined by solving or calculating simultaneous system of equations.

However, it is noted that comparing the number of the un-known values x, y, z .... t to the number (n) of the error equation (the first equation), the latter is larger than the former. Employing the method of least squares, it is possible to determine x, y, z .... t. Further, substituting the supplemental values x, y, z .... t, respectively determined by the method of least sequares into the second equation enables to calculate the true values.

Next, a method of measurement will be concretely explained.

The theodlite 1 and the subtense bar 2 are used in the measurement process. The theodlite 1 is one kind of transits and of precise single shaft type provided with a movable upper portion.

The subtense bar 2 is called a reference ruler or measuring rod and it has three targets as shown in FIG 5 according to the embodiment of the present invention.

The theodlite 1 is the surveilance apparatus and it must determine at least horizontal angles and altitude angles.

As shown in FIG 5, the subtense bar 2 has three targets of the first target (measurement point) 21, the second target 22, and the third target 23. These first, second and third targets are separated at regular or predetermined intervals and they have shape of globe or sphere.

It is preferable to made the subtense bar 2 of some materials having a small coefficient of expansion and it is installed on a suitable stand.

The hairs 11, 11 ... of the reticle for collimating the subtense bar 2 of the embodiment of the present invention is preferable to construct as shown in FIG 8(a) as of a plural type and they are arranged cocentrically. The reason for using a plurality of hairs 11, 11 ... is that there are differences between the sizes of the targets focussed on these hairs since the particular relationship between the hairs and their installation spaces causes the distances between the theodlite 1 and the subtense bar 2 differed from each other. Consequently, when the theodlite is separated from the subtense bar 2 by a long distance, it will be focussed as shown in FIG 8(b). On the contrary, when they are separated by a short distance as shown in FIG 8(c), it will be focussed as shown. Because the first, the second, and the third targets, respectively have global shapes, it is possible to carry out a precise collimation as shown in FIG 8(d) even when the subtense bar 2 is slanted.

According to the conventional targets, they have marks formed on their portions of circular cone shape and flat surface, so that they are not used when the subtense bar 2 is slanted.

On the contrary, the embodiment of the present invention enables to carry out the measurement even the subtense bar 2 is slanted. Accordingly, because the targets have spherical shapes, it is easy and effectively to collimate the targets even when the subtense bar 2 is slanted, as will be explained.

The measurement process of the present invention will be described in detail.

First, in order to know the coordinates of the target point, it is necessary to know the position (coordinates) of the theodlite 1 itself. So, a number of theodlite 1, a number of subtense bar 2, and a number of surveilance are determined. Then, a position determining of the theodlite 1 is carried out. Such position determining step of the theodlite 1 is called hereinafter an orientation.

According to the embodiment of the present invention, the number of theodlite 1 is represented by'th'and the number of the subtense bar 2 is represented by'sub'.

Next, the subtense bar 2 measured from respective theodlites 1, 1 .... In this time, during a collimation of the subtense bar 2, the horizontal angle and the altitude angle are simultaneously surveyed.

Here, measurement equations concerning the horizontal angle, altitude angle, and distance of subtense bar 2 will be explained.

(Measurement equation for horizontal angle)

When the theodlite i = 1 - th are surveyed along the direction (OBi) from i, the measurement equation for horizontal angle is described as shown below, wherein horizontal angle Hi, OBi

$$H_{i,OBi} = \tan^{-1} \frac{y_{OBi} - y_i}{x_{OBi} - x_i} \qquad \cdots \cdots (7)$$

(Measurement equation for altitude angle)

Presuming that the horizontal angle and the altitude angle are Vi, OBi as described below

$$V_{i,OBi} = \tan^{-1} \frac{z_{OBi} - z_i}{\sqrt{(x_{OBi} - x_i)^2 + (y_{OBi} - y_i)^2}} \qquad \cdots \cdots (8)$$

(Measurement equation for length of Subtense bar)

Because the number of subtense bar 2 is sub, the point No. is described by the following term.

Sb (th + (2i - 1), th + 2i)     (9)

When the number i of the subtense bar 2 is 1 - sub.
Consequently, the measurement equation is shown below

$$S_i = \sqrt{\begin{array}{l}(X_{sb(th+2i)} - X_{sb(th+(2i-1))})^2 \\ + (Y_{sb(th+2i)} - Y_{sb(th+(2i-1))})^2 \\ + (Z_{sb(th+2i)} - Z_{sb(th+(2i-1))})^2\end{array}}$$

$$\cdots\cdots (10)$$

wherein i = 1 - sub.

(Measurement equation for straightness between fixed points)

The straightness of the subtense bar 2 necessitates a measurement equation concerning a space angle constituted by three fixed points and the straightness can be considered to be divided into a horizontal angle Ha obtained when these three fixed points are projected on a horizontal face and an altitude angle Va obtained when these three fixed points are projected on a vertical face (x-z plane or y-z plane).

These error equations are the same as that of the horizontal angle and the altitude angle shown below.

Next, an error equation concerning the horizontal angle, the altitude angle, and the distance between subtense bars 2 will be explained.

(Error equation for horizontal angle)

Presuming that an measurement value is $\ell Hi, OBi$ and a measurement error is $\Delta Hi, OBi$, the following equation is obtained.

$$LHi.OBi = \ell Hi.OBi + \Delta Hi.OBi \qquad (11)$$

i in the eleventh equation means the number of theodlite 1 and it is from 1 to th. OBi means the measured number when the point No. of theodlite 1 is i.

Consequently, it is linearized as shown below.

$$\ell_{Hi.OBi} + \Delta_{Hi.OBi}$$
$$= f_{Hi.OBi}(X'_{OBi}, Y'_{OBi}, X'_i, Y'_i)$$
$$+ \frac{\partial f_{Hi.OBi}}{\partial X'_{OBi}} X_{OBi} + \frac{\partial f_{Hi.OBi}}{\partial Y'_{OBi}} y_{OBi}$$
$$+ \frac{\partial f'_{Hi.OBi}}{\partial X'_i} x_i + \frac{\partial f'_{Hi.OBi}}{\partial Y'_i} y_i$$

$$\cdots\cdots (12)$$

Presuming that the approximate value determined by the seventh equation (measurement equation) is $\ell' Hi, OBi$

$$\ell'_{Hi.OBi}$$
$$= tan^{-1} \frac{Y'_{OBi} - Y'_i}{X'_{OBi} - X'_i}$$

$$\cdots\cdots (13)$$

This thirteenth equation is equal to fHi, OBi of the twelveth equation.
As a result, the error equation for the horizontal angle is shown below.

$$\Delta_{Hi,OBi}$$

$$= \frac{\partial f_{Hi,OBi}}{\partial X'_{OBi}} \; x_{OBi} + \frac{\partial f_{Hi,OBi}}{\partial Y'_{OBi}} \; y_{OBi}$$

$$+ \frac{\partial f_{Hi,OBi}}{\partial X'_{i}} \; x_{i} + \frac{\partial f_{Hi,OBi}}{\partial Y'_{i}} \; y_{i} + W_{Hi,OBi}$$

$$\cdots\cdots(14)$$

Wherein

$$W_{Hi,OBi} = \ell'_{Hi,OBi} - \ell_{Hi,OBi} \quad (15)$$

Here terms of partial differentiation are shown below.

$$\frac{\partial f_{Hi,OBi}}{\partial X'_{OBi}}$$

$$= \frac{-(Y'_{OBi} - Y'_{i})}{(X'_{OBi} - X_{i})^{2} + (Y'_{OBi} - Y_{i})^{2}}$$

$$\cdots\cdots(16)$$

$$\frac{\partial f_{Hi,OBi}}{\partial Y'_{OBi}}$$

$$= \frac{X'_{OBi} - X'_{i}}{(X'_{OBi} - X_{i})^{2} + (Y'_{OBi} - Y_{i})^{2}}$$

$$\cdots\cdots(17)$$

$$\frac{\partial f_{Hi,OBi}}{\partial X'}$$

$$= \frac{Y'_{OBi} - Y'_{i}}{(X'_{OBi} - X_{i})^{2} + (Y'_{OBi} - Y_{i})^{2}}$$

$$\cdots\cdots(18)$$

$$\frac{\partial f_{Hi,OBi}}{\partial Y'}$$

$$= \frac{-(X'_{OBi} - X'_{i})}{(X'_{OBi} - X_{i})^{2} + (Y'_{OBi} - Y_{i})^{2}}$$

$$\cdots\cdots(19)$$

(Error equation for altitude angle)

An error equation for the altitude angle as well as horizontal angle will be introduced. The number of the measurement of altitude angle is equal to that of the horizontal angle.

When the altitude angle is Vi, OBi, a measurement equation shown in (8) is obtained. Presuming a measurement value is $\ell$vi, obi and a measurement error is $\Delta$vi, obi the following equation is obtained.

$$Lvi, OBi = \ell vi, OBi + \Delta vi, OBi \qquad (20)$$

Consequently, the error equation can be changed to that as shown below.

$$
\begin{aligned}
\ell_{vi.OBi} &+ \Delta_{vi.OBi} \\
= f_{vi.OBi} & ( X'_{OBi}, Y'_{OBi}, Z'_{OBi}, X'_{i}, Y'_{i}, Z'_{i} ) \\
&+ \frac{\partial f_{vi.OBi}}{\partial X'_{OBi}} x_{OBi} + \frac{\partial f_{vi.OBi}}{\partial Y'_{OBi}} y_{OBi} + \frac{\partial f_{vi.OBi}}{\partial Z'_{OBi}} z_{OBi} \\
&+ \frac{\partial f_{vi.OBi}}{\partial X'_{i}} x_{i} + \frac{\partial f_{vi.OBi}}{\partial Y'_{i}} y_{i} + \frac{\partial f_{vi.OBi}}{\partial Z'_{i}} z_{i} \\
& \qquad\qquad\qquad\qquad\qquad\qquad \cdots\cdots (21)
\end{aligned}
$$

Presuming the approximate value determined by the eighth equation above is $\ell$'vi, OBi, the following equation will be obtained.

$$
\begin{aligned}
\ell'_{vi.OBi} &\\
= tan^{-1} & \left\{ \frac{Z'_{OBi} - Z'_{i}}{\sqrt{(X'_{OBi} - X'_{i})^{2} + (Y'_{OBi} - Y'_{i})^{2}}} \right\} \\
& \cdots\cdots (22)
\end{aligned}
$$

As error equation for altitude angles is obtained as shown below.

$$
\begin{aligned}
\Delta_{vi.OBi} &\\
= \frac{\partial f_{vi.OBi}}{\partial X'_{OBi}} & x_{OBi} + \frac{\partial f_{vi.OBi}}{\partial Y'_{OBi}} y_{OBi} + \frac{\partial f_{vi.OBi}}{\partial Z'_{OBi}} z_{OBi} \\
+ \frac{\partial f_{vi.OBi}}{\partial X'_{i}} & x_{i} + \frac{\partial f_{vi.OBi}}{\partial Y'_{i}} y_{i} + \frac{\partial f_{vi.OBi}}{\partial Z'_{i}} z_{i} + w_{vi.OBi} \\
& \qquad\qquad\qquad\qquad \cdots\cdots (23)
\end{aligned}
$$

Wherein

$$Wvi, obi = \ell'vi, obi - \ell vi, obi$$

It is noted that the term of partial differential of the twenty-third equation is calculatable as that of horizontal angles, so the term is omitted.

(Error equation for length of subtense bar 2)

Next, an error equation for the length of the subtense bar is introduced.

Presuming that a measurement value is $\ell si$ and a measurement error is $\Delta si$, the following equation can be obtained.

$$Lsi = \ell si + \Delta Si \quad (24)$$

$$
\begin{aligned}
\ell_{si} + \Delta S_i \\
= f_{si}(X'_{sb(th+2i)},\ Y'_{sb(th+2i)},\ Z'_{sb(th+2i)},\ X'_{sb(th-2i)} \\
Y'_{sb(th-2i)},\ Z'_{sb(th-2i)}) \\
+ \frac{\partial f_{si}}{\partial X'_{sb(th+2i)}} X_{sb(th+2i)} \\
+ \frac{\partial f_{si}}{\partial Y'_{sb(th+2i)}} y_{sb(th+2i)} \\
+ \frac{\partial f_{si}}{\partial Z'_{sb(th+2i)}} Z_{sb(th+2i)} \\
+ \frac{\partial f_{si}}{\partial X'_{sb(th+(2i-1))}} X_{sb(th+(2i-1))} \\
+ \frac{\partial f_{si}}{\partial Y'_{sb(th+(2i-1))}} y_{sb(th+(2i-1))} \\
+ \frac{\partial f_{si}}{\partial Z'_{sb(th+(2i-1))}} Z_{sb(th+(2i-1))} \\
\cdots\cdots (25)
\end{aligned}
$$

Next, after determining an approximate value from the tenth equation (measurement equation), this approximate value is presumed as Q'si and the following equation is obtained.

$$
\begin{aligned}
\ell'_{si} \\
= \sqrt{
\begin{aligned}
& (X'_{sb(th+2i)} - X'_{sb(th+(2i-1))})^2 \\
& + (Y'_{sb(th+2i)} - Y'_{sb(th+(2i-1))})^2 \\
& + (Z'_{sb(th+2i)} - Z'_{sb(th+(2i-1))})^2
\end{aligned}
} \\
\cdots\cdots\cdots (26)
\end{aligned}
$$

Consequently, the error equation for the length of the subtense bar 2 can be shown below.

$$\Delta_{si}$$

$$= \frac{\partial f_{si}}{\partial X'_{sb(th+2i)}} X_{sb(th+2i)}$$

$$+ \frac{\partial f_{si}}{\partial Y'_{sb(th+2i)}} Y_{sb(th+2i)}$$

$$+ \frac{\partial f_{si}}{\partial Z'_{sb(th+2i)}} Z_{sb(th+2i)}$$

$$+ \frac{\partial f_{si}}{\partial X'_{sb(th+(2i-1))}} X_{sb(th+(2i-1))}$$

$$+ \frac{\partial f_{si}}{\partial Y'_{sb(th+(2i-1))}} Y_{sb(th+(2i-1))}$$

$$+ \frac{\partial f_{si}}{\partial Z'_{sb(th+(2i-1))}} Z_{sb(th+(2i-1))}$$

$$+ W_{si}$$

$$\cdots \cdots (27)$$

Wherein

$$W_{si} = \ell'_{si} - \ell_{si} \qquad (28)$$

Meanwhile, the term of partial differential of the twenty-seven equation is calculatable as that of the horizontal angle, so that the term is omitted from here.

As described above, the straightness of lines between the fixed-points are changed to the horizontal angle and altitude angle so as to form an error equation, however it is also possible to form directly an error equation concerning an angle (space angle) formed in space by three fixed points.

Next, a calculation method of the approximate values used in the second euqation will be explained.

As shown in FIG 6(a), a plane surface in a space formed by T1, S1, S2 and S3 is used to obtain a triangle on the plane surface as shown in FIG 6(b).

Applicating method of resection to the triangle T1, S1,S2 and S3 determines $\psi_1$ $\psi_2$.

$$(\psi_1 + \psi_2) = \pi - (\theta_{12} + \theta_{23}) \qquad (29)$$
$$(\psi_1 - \psi_2)/2 = \tan^{-1}(\tan((\psi_1 + \psi_2)/2)/(\tan^{-1}(L_1 \cdot \sin\theta_{23}/L_2 \cdot \sin\theta_{12}) + \pi/4)) \qquad (30)$$

As described above, after all angles and lengths of sides of the triangle T1, S1, S2 and S3 are determined, anyone of T1, S1, S2 or S3 is made as a known point and the direction passing through the known point is fixed as a coordinates, it is possible to determine the three-dimensional position of other respective points.

Consequently, as shown in FIG 7, two directional lines are projected on the plane passing respective measurement points to determine the plane coordinates X, Y, then a altitude height Z can be determined by means of the altitude angle.

That is, the coordinates of the measurement point Q determined from the measurement point T1 are shown below,

$$X_q = D_1 \cdot \cos H_1$$
$$Y_q = D_1 \cdot \sin H_1$$
$$Z_q = D_1 \cdot \tan V_1 \qquad (31)$$

and the coordinates of the measurement point Q determined from the measurement point T2 are shown

below.

$$Xq = D_2 \cdot Cos\ H_2$$
$$Yq = D_2 \cdot Sin\ H_2$$
$$Zq = D_2 \cdot Tan\ V_2 \qquad (32)$$

Accordingly, it is possible to calculate and determine a three dimensional coordinates of the measurement point after the approximate value determined by the process above is substituted in an error equation and the supplemental value is calculated by the method of least squares.

Next, an operation of the embodiment will be explained.

A basic measurement method used in case the measurement point is only one will be explained on the basis of FIGS 1 and 2. The subtense bar 2 has three fixed points (measurement points) of such coordinates of $S_1(X_1,\ Y_1,\ Z_1)$, $S_2(X_2,\ Y_2,\ Z_2)$, and $S_3(X_3,\ Y_3,\ Z_3)$. The distances between these fixed points are determined to any values. The embodiment of the present invention is explained using a reference point of S and Y equals to 0.

First, as shown in FIG 1, in the step 1 (hereinafter it is abbreviated to as S1), one theodlite 1 is installed on the origin of the coordinates of (0, 0, 0) and it is used as a known point.

Then, the measurement apparatus is arranged at the measurement point.

Next, in the step 2 or S2, the subtense bar 2 is installed and three fixed points are set. The subtense bar of the embodiment is a collimation target.

After theodlite 1 and the subtense bar 2 are installed, the fixed points $S_1$, $S_2$ and $S_3$, respectively of the subtense bar 2 are collimated from the theodlite 1 in S3 to measure a horizontal angle and altitude angle.

Next, in S4, these approximate value of respective points are calculated by means of measurement data. Then, in S5, the measurement data forms the horizontal angles and the altitude angles (including that correspond to the straightness of the lines between fixed points) and the distance between the fixed points of the subtense bar 2 forms an error equation.

The error equation for horizontal angles are shown below.

The error equations concerning a horizontal angle $H_{12}$ formed by the fixed point $S_1$ and another fixed point $S_2$ seeing from the theodlite 1, a horizontal angle $H_{23}$ formed by the fixed $S_2$ and the fixed point $S_3$, a horizontal angle $H_{31}$ formed by the fixed point $S_3$ and the fixed point $S_1$, and a space angle Ha formed by the fixed point $S_1$, fixed point $S_2$ and fixed point $S_3$.

An error equation for altitude angles is shown below.

An error equation concerning an altitude angle $V_1$ of the fixed point $S_1$, an altitude angle $V_2$ of the fixed point $V_2$, and an altitude angle $V_3$ of the fixed point $S_3$ seeing from the theodlite 1 is formed.

Error equations for the distances between the three fixed points are described below.

That is, error equations for a distance $L_1$ between the fixed points $S_1$ and $S_2$, a distance $L_2$ between the fixed points $S_2$ and $S_3$, and a distance $L_3$ between the fixed points $S_3$ and $S_1$.

When the number of the measurement point is one, the present invention can be applied to the embodiment if error equations of kinds of more than 8 which is larger than the number of unknown figures of 8 are formed.

In S4, the method above determines approximate values from the measurement data and error equations are set in S5.

As shown in FIG 2, because the number of the unknown figure is 8 and the error equations are 10, using the method of least squares in S6 enables to calculate theorically unknown coordinates.

According to the embodiment of the present invention, it is not necessary to use two theodlite as used to in the conventional method and collimate alternately, and it is possible to carry out measurements by one theodlite.

Meanwhile, the known point may be determined to a measurement point or a fixed point and it is necessary to decrease a number of unknown values than that of the error equation.

Next, an application of the measurement method using two measurement points will be explained on the basis of FIG 3 and FIG 4.

As shown in FIG 3, the theodlite 1 is installed at the first measurement point $T_1$ in S1. Next, in S2, the subtense bar 2 is installed and three fixed points are set. In S3, the three fixed points of the subtense bar 2 are collimated from the theodlite 1 in order to measure respective horizontal angles and altitude angles.

Next, the theodlite 1 is moved from the measurement point $T_1$ to the second measurement point $T_2$ in S4, and the three fixed points of the subtense bar 2 are collimated in S5 in order to measure respective horizontal angles and altitude angles.

Then, in S6, approximate values of each point are calculated from the measurement data mentioned above. In S7, an error equation is set using measured horizontal angles and altitude angles (including that corresponding to straightness of lines between the fixed points) and the distance between fixed points of the subtense bar 2.

Thus, the error equation described below can be formed.

There are error equations for horizontal angles as shown below.

Error equations for a horizontal angle formed by the fixed points $S_1$ and $S_2$, a horizontal angle formed by the fixed points $S_2$ and $S_3$, a horizontal angle formed by the fixed points $S_1$ and $S_3$ seeing from one measurement point, a horizontal angle formed by the fixed points $S_1$ and $S_2$, a horizontal angle formed by the fixed points $S_1$ and $S_3$ seeing from another measurement point, and a space angle formed by the fixed points $S_1$, $S_2$ and $S_3$ are formed.

An error equation for altitude angles are shown below.

Error equations for an altitude angle for the fixed point $S_1$, an altitude angle for the fixed point $S_2$, an altitude angle for the fixed point $S_3$ seeing one measurement point, and an altitude angle for the fixed point $S_1$, an altitude angle for the fixed point $S_2$, and an altitude angle for the fixed point $S_3$ seeing from another point are formed.

An error equation for the distance between the three points is the same as that of the case having one measurement point.

When the measurement points are two as described above, the present invention can be applied to if error equations of more than 11 which is more than the number of 11 of the unknown figure are formed.

Following these steps of S1 to S3, S4 and S5, and S6 to S8, a three dimensional coordinates of the measurement points $T_1$ and $T_2$ is determined and then an orientation is completed.

Next, in S9, from the measurement or surveying points $T_1$ and $T_2$, any measurement point (hereinafter referred to as target point) $P_1$ is collimated to measure the horizontal angle and the altitude angle.

Then, in S10 and S11, similar to the orientation above, approximate values are calculated and an error equation is erected. The error equation is solved by the method of least squares so as to determine the coordinates of the target point Pi. Meanwhile, the process from S9 to S11 are repeated concerning each target point.

Next, an modified embodiment for measurement of the measurement point (target point) which is not able to directly collimate from the outside will be explained.

As shown in FIG 9, the subtense bar 2 used in the modified embodiment has a first fixed point (measurement point) 21, a second fixed point 22 and a third fixed point 23, and a measurement end portion 24, respectively formed on there. These first, second and third fixed points 21, 22 and 23 are formed at a predetermined interval and have global shapes. It is possible to employ any shape of the fixed points as far as they can be collimated from the theodlite 1.

The measurement end portion 24 is a measurement portion formed at a front end portion of the subtense bar 2 in order to determine its position relative to the measurement point (target point). The measurement end portion 24 is formed on the same straight line of the fixed points 21, 22 and 23 of first, second and third. The interval distance between them are precisely measured. In addition, according to the embodiment of the present invention, although the measurement end portion 24 is formed on the same straight line as that of the first, second and third fixed points 21, 22 and 23, it is not always necessary to place it on the same straight line if it places at a position specified by the three fixed point.

The subtense bar 2 is held by a holding ring 3 and a tripod 4 in order to install the measurement end portion 24 of the subtense bar 2 at the measurement point (target point).

This tripods corresponds to a fixing device.

Additionally, according to the embodiment, a center fixing plate 5 is used to secure the measurement end portion 24 of the subtense bar 2 at a center of the measurement point (target point).

It is preferable to make the subtense bar 2 of a material having small coefficient of thermal expansion.

The subtense bar 2 constructed as described above has a measurement end portion 24, so even when the measurement point (target point) isn't able to directly collimate the measurement point (target point) as shown in FIG 11, the measurement point (target point) can be specified if it is possible to collimate the first, second and third fixed points 21, 22 and 23.

A measurement method of the modified embodiment of the present invention will be explained. Similar to that of the previous embodiment, first an orientation is carried out, then the subtense bar 2 is measured or surveyed from each theodlites 1, 1. In this case, by collimation of the subtense bar 2, it is possible to simultaneously measure the horizontal angle and the altitude angle.

Meanwhile, a measurement equation for the horizontal angle, altitude angle and the distance of the subtense bar 2 is the same as that of the previous embodiment, so its explanation is omitted.

A calculation method of approximate values used to the second equation of the modification of the present invention will be explained.

In FIG 12(a), it is presumed that the fixed points are S1, S2 and S3, a directional angle measured from a point of the apparatus $T_1$ is Hi, and an altitude angle is Vi (i = 1, 2, 3).

On a plane including $T_1$, S1, S2 and S3, a space angle is $\theta$ expressed as shown below.

$$\theta_{12} = \arccos\,(\cos H_1 \cdot \cos H_2$$
$$\cdot \cos V_1 \cdot \cos V_2$$
$$+\sin H_1 \cdot \sin H_2$$
$$\cdot \cos V_1 \cdot \cos V_2$$
$$+\sin V_1 \cdot \sin V_2)$$
$$\cdots\cdots (33a)$$

$$\theta_{23} = \arccos\,(\cos H_2 \cdot \cos H_3$$
$$\cdot \cos V_2 \cdot \cos V_3$$
$$+\sin H_2 \cdot \sin H_3$$
$$\cdot \cos V_2 \cdot \cos V_3$$
$$+\sin V_2 \cdot \sin V_3)$$
$$\cdots\cdots (33b)$$

In FIG 12(a), when a plane in a space formed by T1, S1, S2 and S3 is picked up, a triangle as shown in FIG 12(b) can be obtained,

Method of resection is applied to the triangle T1, S1, S2 and S3 and $\psi_1$ and $\psi_2$ are obtained.

$$(\psi_1 + \psi_2) = \pi - (\theta_{12} + \theta_{23}) \qquad (34a)$$

$$(\psi_1 - \psi_2)/2 = \arctan\,[\tan\,((\theta_{12} + \theta_{23})/2)/\tan\,(\lambda + \pi/4)\,]$$
$$ここで、\ \tan\lambda = (L_1/L_2) \cdot (\sin\theta_{23}/\sin\theta_{12})$$
$$\cdots\cdots (34b)$$

The following equations are obtained from the equations of (34a) and (34b).

$\psi_1 = (\psi_1 + \psi_2)/2 + (\psi_1 + \psi_2)/2$
$\psi_1 = (\psi_1 + \psi_2)/2 - (\psi_1 + \psi_2)/2$

Distances between the apparatus point $T_1$ and the fixed points S1, S2 and S3 are determined using the following equations.

$D_1 = (L_1 + L_2) \cdot \sin\psi_2/\sin\,(\theta_{12} + \theta_{23})$
$D_2 = L_1 \cdot \sin\psi_1/\sin\theta_{12}$
$D_3 = (L_1 + L_2)\sin\psi_1/\sin\,(\theta_{12} + \theta_{23}) \qquad (35)$

16

Accordingly, the three-dimensional coordinates position of these fixed points S1, S2 and S3 are obtained as shown below.

$$X_1 = X_\emptyset + D_1 \cdot \cos H_1 \cdot \cos V_1$$
$$Y_1 = Y_\emptyset + D_1 \cdot \sin H_1 \cdot \cos V_1$$
$$Z_1 = Z_\emptyset + D_1 \cdot \sin V_1 \qquad (36a)$$

$$X_2 = X_\emptyset + D_2 \cdot \cos H_2 \cdot \cos V_2$$
$$Y_2 = Y_\emptyset + D_2 \cdot \sin H_2 \cdot \cos V_2$$
$$Z_2 = Z_\emptyset + D_2 \cdot \sin V_2 \qquad (36b)$$

$$X_3 = X_\emptyset + D_3 \cdot \cos H_3 \cdot \cos V_3$$
$$Y_3 = Y_\emptyset + D_3 \cdot \sin H_3 \cdot \cos V_3$$
$$Z_3 = Z_\emptyset + D_3 \cdot \sin V_3 \qquad (36c)$$

Consequently, after substituting an approximate value determined by the calculation above into the error equation, the supplemental volume is calculated by the method of least squares and it becomes possible to calculate the three-dimensional coordinates of three fixed points.

An operation of the modified embodiment of the present invention will be explained.

On the basis of FIGS 13 and 14, a basic measurement process to be carried out when the measurement point is only one will be explained. The subtense bar 2 has three fixed points (collimation targets) formed on there, coordinates of the points $S_1$ ($X_1$, $Y_1$, $Z_1$), $S_2$($X_2$, $Y_2$, $Z_2$) and $S_3$ ($X_3$, $Y_3$, $Z_3$). Presuming further the coordinates of the measurement end portion 24 as $S_4$($X_4$, $Y_4$, $Z_4$). The distances between fixed points of the subtense bar 2 have been determined to anyone.

First, as shown in FIG 14, in the step 1 (hereinafter referred to as S1), the theodlite 1 is installed at the measurement point (here, the measurement point is a known one).

That is, a measurement apparatus is placed at the measurement point.

Next, in S2, the measurement end portion 24 of the subtense bar 2 is placed at the measurement point (target point) and the three fixed points are settled. The subtense bar 2 according to the modified embodiment corresponds to the collimation target.

After the theodlite 1 and the subtense bar 2 are set, collimation operations are carried out from the theodlite 1 to the fixed points $S_1$, $S_2$ and $S_3$ of the subtense bar 2 in order to measure the horizontal angle and the altitude angle.

Next, in S4, approximate values of respective points are calculated by the data of measurement.

In S5, an error equation is formed from horizontal angles and altitude angles (including that corresponding to the straightness of lines between fixed points) and the distance between these fixed points of the subtense bar 2.

Meanwhile, an error equation for horizontal angles, an error equation for altitude angles, and an error equation for the distances between three fixed points are the same as that of the previous embodiment, and they are omitted.

That is, in S4, an approximate value is determined from the measurement data using the process above and an error equation is set in S5.

Although the known point of the embodiment is a measurement point, it may be of a fixed point. In any case, it is necessary to decrease the number of unknown value than that of the error equation.

Then, in S6, the coordinates of unknown fixed points are calculated using the method of least squares.

Next, in S7, a coordinates $S_4$ of the measurement end portion 24 is determined from the coordinates of three fixed points determined in S6. Because the measurement end portion 24 is placed on the same straight line as that of the three fixed points $S_1$, $S_2$ and $S_3$, the coordinates $S_4$($X_4$, $Y_4$, $Z_4$) of the measurement end portion 24 can be determined by the following equations.

$$X_4 = [X_3 + (X_3 - X_1) L_3 / (L_1 + L_2)$$

$$+ X_2 + (X_2 - X_1) (L_2 + L_3) / L_1$$

$$+ X_3 + (X_3 - X_2) L_3 / L_2] / 3$$

$$\cdots \cdots (37a)$$

$$Y_4 = [Y_3 + (Y_3 - Y_1) L_3 / (L_1 + L_2)$$

$$+ Y_2 + (Y_2 - Y_1) (L_2 + L_3) / L_1$$

$$+ Y_3 + (Y_3 - Y_2) L_3 / L_2] / 3$$

$$\cdots \cdots (37b)$$

The subtense bar 2 is constructed so as to attain of a condition: $L_1 = L_2 = L_3$, so $X_4$ determined by the equation of (37a) is used to determine $Z_4$ as described below.

$$Z_4 = [(Z_2 - Z_1) (X_4 - X_1) / (X_2 - X_1)$$

$$+ Z_1$$

$$+ (Z_3 - Z_2) (X_4 - X_2) / (X_3 - X_2)$$

$$+ Z_2$$

$$+ (Z_1 - Z_3) (X_4 - X_3) / (X_1 - X_3)$$

$$+ Z_3] / 3$$

$$\cdots \cdots (37c)$$

As described above, in S7, the coordinates $S_4$ of the measurement end portion 24 of the target point can be determined.

A case in which a coordinates of the measurement point is a known point has been explained in the embodiment, however it is possible to make any fixed point a known point, and two measurement points are set, the theodlite is moved to measure it in order to determine a coordinates of the measurement end portion 24 of the measurement point (target point).

According to the embodiment constructed as described above, even though the measurement point is not directly collimated, it is possible to use the subtense bar 2 provided with measurement end portion 24 in order to carry out effectively a three-dimensional measurement.

Meanwhile, it is possible to measure only the measure point which is not directly able to collimate. Also, it is possible to use a subtense bar 2 provided with three fixed points (collimation target) to carry out a three-dimensional measurement of a point which is able to directly collimate, and simultaneously to use the subtense bar 2 of the embodiment to measure the point which is not able directly to collimate. When the measurement point of the embodiment (a fixed position of the theodlite 1) is directly collimated to carry out a three-dimensional measurement, it is possible to easily carry out a measurement operation of the measurement point which is not able to directly collimate because the apparatus point $T_1$ is known.

The three-dimensional measurement method and the three-dimensional measurement reference ruler of the modified embodiment according to the present invention are used to not only the three-dimensional measurement of air planes, rail cars, ships, but also large constructions such as tunnels and atomic furnaces, and to measure a terrain of collapsed steep slopes.

Next, the self-illumination type reference ruler of the embodiment having its targets self-illuminated will be explained.

The first, second and third targets 21, 22 and 23 of the self-illumination type reference or standard ruler shown in FIG 5 are made of a light conductive material and light beams are ejected as a diffused light beam bundle through its interior. The first, second and third targets 21, 22 and 23 of the self-illumination type reference ruler are made of ceramics made by mixing almina and cobalt.

This kind of ceramics is made by adding high purity almina powder to magnesium salt of 0.2 mol %, the mixture is solved in distillated water, salt such as chromium chloride and cobalt chloride corresponding to dye composition is blended into the water to uniformly distribute or scatter, water is distillated, dried, and solidified. Additionally, the solidified is heated for about one hour at 600 °C and salt composition becomes oxide, finally it is pulverized by a ball mill in an ethanol agent. The ball mill uses a number of steel balls covered with urethan. A pulverization and blending operation of the ball mill are carried out for about three days. The ethanol is distillated from the resultant fine powder obtaining solidified material, the solidified material is pulverized in a mortar, and the resultant is used as a raw material.

Next, the raw material is placed in a mold for the product to be manufactured, a primary molding for the mold is carried out by applying a pressure of 100 kg/cm$^2$ to the mold, and a secondary molding for the product is carried out by applying a pressure of a rubber press of two ton/cm$^2$.

The finish sintering operation consists of a preliminary sintering, a main sintering and a re-sintering. In the preliminary sintering step, the temperature rises from 1100 °C to 1200 °C at a rate of 1 °C per minute in order to heat particles to bond each other. In the main sintering step, the temperature rises to 1100 °C at a rate of 10 °C per minute, and rises from 1100 °C to 1780 °C at a heating rate of 100 °C per an hour, and the raw material is baked in a vacuum for about four hours. Nickel and cobalt are poor in coloring, so they necessitate re-baking. Re-baking means to heat it in air from 1650 °C to about 1700 °C and bake it for 20 to 24 hours in order to oxidize it to generate color of it. Sintering means to make fine bubbles to disappear in order to make a skin of the product fine.

According to the embodiment of the present invention, nickel is added to the material.

Because the first, second and third targets 21, 22 and 23 are made of ceramic material, even when their target portions are polished, a diffused light beam bundle is ejected from a surface of the target portion, so the recognition or observatability is exceedingly improved. Because a surface of the target is used as a diffusion surface, it is not necessary to carry out a sand blasting and a profile of the target doesn't become unclear effectively improving a measurement precision.

The self-illumination type subtense bar 2 of the embodiment has an optical fiber 6 for conducting light beams to the first, second and third targets 21, 22 and 23, a light source 7 for supplying light beams, and an electric power source 8 for supplying electricity to the light source 7. The optical fiber 6 is a light conductive member.

First Embodiment of self-illumination type Subtense bar

As shown in FIG 16 to FIG 18, the light source 7 and the electric power source 8 are placed outside of the supporting portion 24, and the light source 7 and the first, second and third targets 21, 22 and 23 are connected through the optical fiber 6. It is noted that the optical fiber 6 is placed in an interior of the supporting portion 24.

Second embodiment of self-illumination type subtense bar

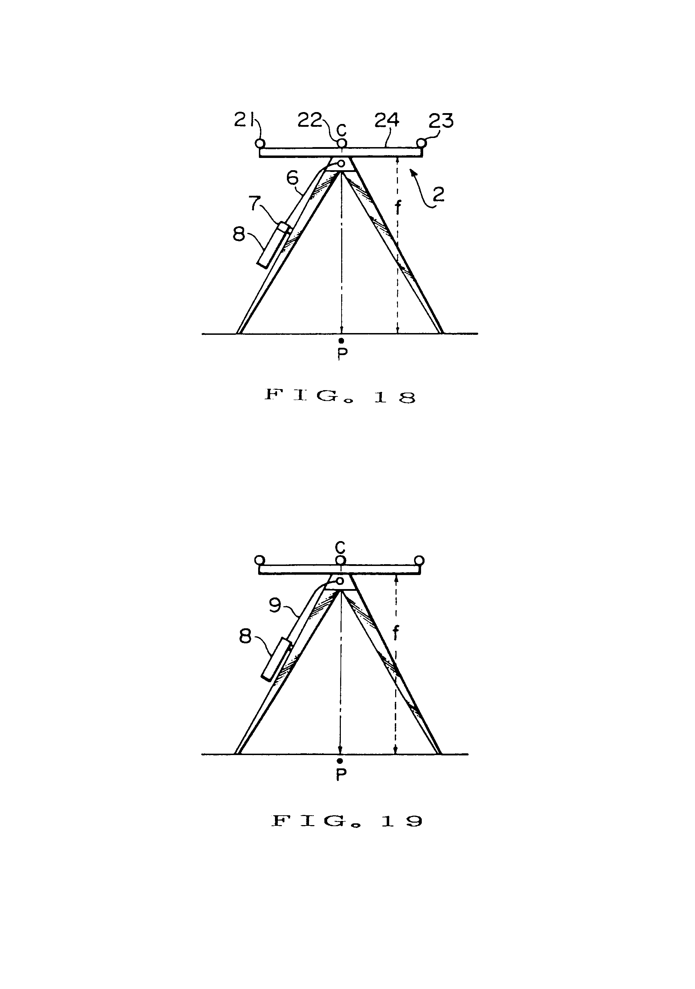

As shown in FIG 17(a) and FIG 19, the electric power source 8 is placed outside of the supporting portion 24, the light source portion 7 is formed in the supporting portion 24, an electric wire 9 is connected from the power source 8 to the light source portion 7 to supply power, and the light source portion 7 in the supporting portion 24 is connected to the first, second and third targets 21, 22 and 23 by an optical fiber. It is possible to install the optical fiber 6 in the supporting portion 24. As shown in FIG 17(b), also it is possible to make the power source portion 7 and an end portion of the optical fiber 6 to oppose to each other in the supporting member 24.

According to the three-dimensional measurement method of the present invention, it consists of a first step of placing the measurement apparatus at the measurement point and the collimation targets at the three fixed points, a second step of collimating the three fixed points from the measurement apparatus in order to measure three kinds of horizontal angles and altitude angles, and a third step of setting an error equation for the horizontal angle and the altitude angle, the distances between these three fixed points, and straightness of the lines between the points from the measurement data obtained in the second step, determining an approximate value from the measurement data, and using the method of least squares in order to determine positions of respective points. Consequently, it is possible to obtain such effects as that no mutual collimation is necessary between measurement apparatuses, labor work and time are saved, and only one measurement apparatus can measure the three-dimensional coordinates.

In addition, according to the present invention, it is possible to carry out a three-dimensional measurement through surveilance operation of the three fixed points distances between them are known, of two points of measurement, and of the target points their positions are unknown. The present invention has effects of possibility of setting the measurement apparatuses at any points, of using the method of least squares, of carrying out a precised measurement having little accumulated error.

It is not necessary to place the subtense bar horizontally in carrying out the present invention, so it is possible to function a very effective and productive measurement operation.

Because that, according to the present invention, the subtense bar used to measure the positions of at least three points after they are surveyed has three targets formed on the subtense bar at a predetermined interval, it is possible to carry out the three-dimensional measurement method without any accumulated error. In addition, it is not necessary to face to face or oppose you or operator to the measurement apparatus or machine and to place the subtense bar horizontal, so it is possible to install the subtense bar at any position. In particular, there is no restriction on its installation place of the subtense bar and it is place without difficulty at any place even where of bad conditions.

Further, it is possible to make the three targets of the subtense bar global or ball-like, so even when the subtense bar is placed on a slope, the measurement operation can be done with little collimation error.

According to the three-dimensional measurement method of the present invention, it consists of a first step of placing the measurement apparatus at the measurement point and the collimation targets at the three unknown fixed points, a second step of collimating the three fixed points from the measurement apparatus in order to measure three kinds of horizontal angles and altitude angles, a third step of setting an error equation for the horizontal angle and the altitude angle, the distances between these three fixed points, and straightness of the lines between the points from the measurement data obtained in the second step, determining an approximate value from the measurement data, and using the method of least squares in order to determine positions of respective points, and a fourth step of determining the position of the measurement portion from the positions of three fixed points. Consequently, it is possible to obtain such effects as that no mutual collimation is necessary between measurement apparatuses, labor work and time are saved, and only one measurement apparatus can measure the three-dimentional coordinates.

According to the principle of the present invention, because the measurement points are made of known points and the fixed points are made of known points, it is effectively done to carry out a universal and useful measurement.

The three-dimensional measurement reference ruler according to the present invention has three fixed points (collimation targets) fomred and placed on the ruler at a predetermined interval and a measurement end portion formed on an end portion of the ruler so as to place the ruler relative to the determined point (target point), so that even when the measurement point is not directly collimated by any measurement device, the measurement point can be easily and surely measured through a process of three-dimensional measurement.

The three-dimensional measurement reference ruler according to the present invention consists of a main body of the reference ruler through which the ruler is secured to a fixing mechanism such as a tripole, three fixed points (collimation targets) formed on the main body of the reference ruler at a predetermined interval, and a measurement end portion formed on the end portion of the main body of the reference ruler on the same straight line as that of these three fixed points so as to determine the place of the ruler relative to the measurement point (target point). Consequently, because the measurement point of the reference ruler can be surely fixed on the measurement point (target point) through a tripole and the like and further these three fixed points and the measurement end portion are arranged along the same straight line, it is possible to attain of an excellent effect of determining the coordinates of the measurement point (target point) through a relatively simple calculation.

Furthermore, according to the present invention, the reference ruler has a plurality of targets, respectively made of light beam conductive material for ejecting interior light as a diffused light bundle, and a supporting portion for supporting these targets. The reference ruler has a light source for supplying light to the targets and a light conductive member for conducting the light from the light source to these targets. As a result, even when a measurement or surveilance operation is carried out in a room of poor illumination or relatively dark, the targets can be seen clearly and observed distinctly. Also, the targets can be made of global, any measurement error can be decreased, and the targets are of self-illumination type, so the recognition of them is improved exceedingly.

The reference ruler of the present invention constructed as mentioned above can be used to a three-dimensional measurement of airplanes and ships, surveylance of steep slope broken terrain, and deformation check of large constructions.

Industrial application

As described above, according to the three-dimensional measurement method, the three-dimensional measurement reference ruler and the self-illumination type reference ruler of the present invention, any mutual collimation of the measurement apparatuses is not necessary and resultantly troublesome labor work and time are saved, so it is suitable to measure a three-dimensional coordinates. There are no necessities of opposing the measurement apparatus and no horizontal placement of the subtense bar, so the present invention is effectively used to measure even the three-dimensional coordinates on places of bad condition.

Furthermore, because the reference ruler has a measurement end portion for placing the ruler relative to the measurement point, the ruler is effectively used to carry out a three-dimensional measurement of the measurement point which is not directly collimated through a measurement machine. And, because the targets are made of a light conductive material, the reference ruler of the present invention is too suitable to carry out a measurement or surveilance in a room of poor intensity of illumination.

**Claims**

1. A three-dimensional measurement method for determining respective positions of a measurement point and three fixed points (subtense bar) distances between these fixed points are known, a known point being included in the points above, said method comprising a first step of arranging a measurement apparatus at the measurement point and collimation targets at the three fixed points, a second step for collimating these three fixed points from the measurement apparatus in order to measure three kinds of a horizontal angle and an altitude angle, and a third step for setting an error equation for the horizontal angle, the altitude angle, distances between these three fixed points, and straightness of the distances from the measurement data obtained in the second step, determining an approximate value from the measurement data, and using the method of least aquares in order to determine positions of respective points.

2. A three-dimensional measurement method for determining positions by surveilance of two fixed points and three fixed points mutual distances between these three fixed points known, a known point being included in any group of points, and distances between target points their positions are not known, said method comprising a first step of placing measurement apparatuses at respective measurement points and collimation targets at these three fixed points, a second step for collimating these three fixed points and the target point from respective measurement points in order to measure three kinds of a horizontal angle and an altitude angle, and a third step for setting an error equation for the horizontal angle and the altitude angle, distances between these three fixed points and the straightness of lines of the distances from measurement data determined by a collimation of three fixed points and the target point determined in the second step, determining an approximate value from the measurement data, using the method of least squares in order to determine positions of respective points.

3. A three-dimensional measurement method for determining positions of respective points by measurement operation for distances between a known measurement point and three fixed points (collimation targets of reference ruler) their mutual distances are known, said method comprising a first step for arranging measurement apparatuses at respective points and collimation targets at these three fixed points, a second step for collimating these three fixed points and a target point from respective measurement points and measuring respectively these three kinds of the horizontal angle and the altitude angle, a third step for setting an error equation for the horizontal angle, the altitude angle, distances between the three fixed points and a straightness of lines of the distances from measurement data obtained by collimating the three fixed points and the target points determined in the second step, determining an approximate value from the measurement data, and using the method of least squares in order to determine the positions of three fixed points, and a fourth step for determining a position of a measurement portion from the positions of these three fixed points so as to determine a position of the target point.

4. A three-dimensional measurement method for determining positions, including anyone known point, from measurement operation carried out to a measurement point and three fixed points (collimation targets of reference ruler) their distances between them are known, said method comprising a first step for arranging a measurement apparatus at the measurement point and collimation targets at the three fixed points so as to place a measurement portion specified by said three fixed points at a target point, a second step for collimating the three fixed points and measuring respective three kinds of a horizontal angle and an altitude angle from the measurement apparatus, a third step for setting , from the measurement data obtained in the second step, an error equation for the horizontal angle, an altitude angle, distances between the three fixed points and a straightness of lines or the distances, determining an approximate value from the measurement data, using the method of least squares in order to determine positions of respective points, and a fourth step for determining a position of the measurement portion from the position of the three fixed points determined in the third step in order to determine a position of the target point.

5. A three-dimensional measurement reference ruler having a subtense bar used to carry out a measurement for determining positions of at least three points from a surveylance for these three points, said subtense bar having three targets formed thereon at a predetermined interval.

6. The three-dimensional measurement reference ruler according to claim 5, wherein the three targets are of global shape.

7. A three-dimensional measurement reference ruler used to carry out a measurement for determining or finding positions of at least three points from a surveilance of these three points, said reference ruler having three fixed points (collimation targets) formed thereon at a predetermined interval and a measurement end portion formed at an end portion of the reference ruler in order to position the ruler relative to the measurement point (target point).

8. A three-dimensional measurement reference ruler used to carry out a measurement for determining or finding positions of at least three points from surveilance result of these three points, said reference ruler consisting of a main body of said reference ruler for securing the ruler to a fixing device such as a tripole and the like, three fixed points (collimation targets) formed on the main body at a predetermined interval, and a measurement end portion formed at an end portion of the reference ruler main body on the same straight line as that of three fixed points in order to position the ruler relative to the measurement point (target point).

9. A self-illumination type reference ruler comprising a plurality of targets, respectively formed or made of light conductive material in order to eject interior light as a diffused light bundle at a predetermined interval, a supporting portion for supporting these targets, a light source for supplying light to these targets, and a light conductive member for conducting light from said light source to these targets.

10. The self-illumination type reference ruler according to claim 9, wherein the light conductive member is installed in an interior of the supporting portion.

# F I G . I

```
┌─────────┐
│  START  │
└─────────┘
     │
     ▼
┌────────────────────────────────────┐
│ SET THEODLITE AT SURVEY POINT │  ⟋SI
└────────────────────────────────────┘
     │
     ▼
┌──────────────────────┐
│ SET SUBTENSE BAR │  ⟋S2
└──────────────────────┘
     │
     ▼
┌────────────────────────────────────┐
│ MEASURE HORIZONTAL ANGLE AND │  ⟋S3
│ ALTITUDE ANGLE               │
└────────────────────────────────────┘
     │
     ▼
┌────────────────────────────────────┐
│ CALCULATION OF APPROXIMATE VALUE │  ⟋S4
└────────────────────────────────────┘
     │
     ▼
┌──────────────────────┐
│ SET ERROR EQUATION │  ⟋S5
└──────────────────────┘
     │
     ▼
┌────────────────────────────────────────┐
│ COORDINATES CALCULATION ON METHOD │  ⟋S6
│ OF LEAST SQUARES                  │
└────────────────────────────────────────┘
     │
     ▼
┌─────────┐
│  END    │
└─────────┘
```

# F I G . 2

Z

$S_2(X_2,Y_2,Z_2)$

$S_1(X_1,Y_1,Z_1)$  $Y'_2 = O(known)$ $S_3(X_3,Y_3,Z_3)$

X

Y

$T_1$ : theodlite (known)
$(0,0,0)$

# F I G . 4

$P_1$

any point given

$S_1$  $S_2$  $S_3$

$T_1$  $T_2$

# F I G . 3

```
          ( START )
              │
┌─────────────────────────────────┐
│ SET THEODLITE AT SURVEY POINT T1 │─ S1
└─────────────────────────────────┘
              │
┌─────────────────────┐
│ SET  SUBTENSE  BAR  │─ S2
└─────────────────────┘
              │
┌─────────────────────────────────┐
│ MEASURE HORIZONTAL ANGLE AND     │─ S3
│ ALTITUDE ANGLE                   │
└─────────────────────────────────┘
              │
┌─────────────────────────────────┐
│ SET THEODLITE AT SURVEY POINT T2 │─ S4
└─────────────────────────────────┘
              │
┌─────────────────────────────────┐
│ MEASURE HORIZONTAL ANGLE AND     │─ S5
│ ALTITUDE ANGLE                   │
└─────────────────────────────────┘
              │
┌─────────────────────────────────┐
│ CALCULATION OF APPROXIMATE VALUE │─ S6
└─────────────────────────────────┘
              │
┌─────────────────────┐
│ SET ERROR EQUATION  │─ S7
└─────────────────────┘
              │
┌─────────────────────────────────┐
│ COORDINATES CALCULATION ON METHOD│─ S8
│ OF LEAST SQUARES                 │
└─────────────────────────────────┘
              │
┌─────────────────────────────────┐
│ MEASURE HORIZONTAL ANGLE AND     │─ S9
│ ALTITUDE ANGLE OF TARGET POINT   │
└─────────────────────────────────┘
              │
┌─────────────────────────────────┐
│ CALCULATION OF APPROXIMATE VALUE │─ S10
└─────────────────────────────────┘
              │
┌─────────────────────────────────┐
│ COORDINATES CALCULATION ON METHOD│─ S11
│ OF LEAST SQUARES                 │
└─────────────────────────────────┘
              │
           ◇ IS ◇
        MEASURMENT ─ S12
         FINISHED
            ?
              │
          ( END )
```

25

S₁

21

S₂

22

23

24

2

S₃

23

F I G ₀ 5

F I G. 6 (a)

F I G. 6 (b)

F I G. 7

F I G. 8 (a)

F I G. 8 (b)

F I G. 8 (d)

F I G. 8 (c)

F I G. 9

FIG. 10

FIG. 11

F I G. 1 2 (a)

F I G. 1 2 (b)

$S_1(X_1, Y_1, Z_1)$

$D_1$

$S_2(X_2, Y_2, Z_2)$

$T_1(X_0, Y_0, Z_0)$

$D_2$

$D_3$

$S_3(X_3, Y_3, Z_3)$

FIG. 13

# F I G . 14

```
            ┌─────────┐
            │  START  │
            └─────────┘
                 │
                 ▼
  ┌─────────────────────────────────────────┐
  │ SET THEODLITE AT SURVEY POINT TI         │─S1
  └─────────────────────────────────────────┘
                 │
                 ▼
  ┌──────────────────────────┐
  │ SET SUBTENSE BAR         │─S2
  └──────────────────────────┘
                 │
                 ▼
  ┌─────────────────────────────────────────┐
  │ MEASURE HORIZONTAL ANGLE AND ALTITUDE    │─S3
  │ ANGLE BY THEODLITE                       │
  └─────────────────────────────────────────┘
                 │
                 ▼
  ┌─────────────────────────────────────────┐
  │ CALCULATION OF APPROXIMATE VALUE         │─S4
  └─────────────────────────────────────────┘
                 │
                 ▼
  ┌──────────────────────────┐
  │ SET ERROR EQUATION       │─S5
  └──────────────────────────┘
                 │
                 ▼
  ┌─────────────────────────────────────────┐
  │ COORDINATES CALCULATION OF FIXED         │─S6
  │ POINT BY METHOD OF LEAST SQUARES         │
  └─────────────────────────────────────────┘
                 │
                 ▼
  ┌─────────────────────────────────────────┐
  │ CALCULATION OF COORDINATES OF            │─S7
  │ MEASUREMENT END PORTIONS                 │
  └─────────────────────────────────────────┘
                 │
                 ▼
            ┌─────────┐
            │  END    │
            └─────────┘
```

FIG. 15

FIG. 16

EP 0 483 383 A1

FIG. 17 (a)

FIG. 17 (b)

F I G . 1 8

F I G . 1 9

# INTERNATIONAL SEARCH REPORT

International Application No PCT/JP91/00663

**I. CLASSIFICATION OF SUBJECT MATTER** (if several classification symbols apply, indicate all) [6]

According to International Patent Classification (IPC) or to both National Classification and IPC

Int. Cl$^5$  G01B11/00, G01C15/00, 15/06

**II. FIELDS SEARCHED**

| Minimum Documentation Searched [7] | |
|---|---|
| Classification System | Classification Symbols |
| IPC | G01B11/00, G01C15/00, 15/06 |

Documentation Searched other than Minimum Documentation
to the Extent that such Documents are Included in the Fields Searched [8]

| | |
|---|---|
| Jitsuyo Shinan Koho | 1950 - 1990 |
| Kokai Jitsuyo Shinan Koho | 1971 - 1990 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 58-33105 (Westinghouse Electric Corp.), February 26, 1983 (26. 02. 83), Line 12, upper right column to line 13, lower right column, page 25 & EP, A2, 71977 & US, A, 4503506 | 1, 3, 4 |
| Y | JP, A, 61-34406 (CAE Electronics, Ltd.), February 18, 1986 (18. 02. 86), & EP, A2, 162713 & US, A, 4649504 | 2 |
| Y | JP, A, 1-145516 (National Space Development Agency of Japan), June 7, 1989 (07. 06. 89), (Family: none) | 1-4 |
| X | JP, A, 58-191920 (Karl Zmyis Schifuzing), November 9, 1983 (09. 11. 83), & US, A, 4509269 & DE, C2, 3214998 | 5-8 |
| A | JP, A, 61-277012 (Nippon Telegraph & Telephone Corp.), December 8, 1986 (08. 12. 86), | 1-4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| July 8, 1991 (08. 07. 91) | July 29, 1991 (29. 07. 91) |
| International Searching Authority | Signature of Authorized Officer |
| Japanese Patent Office | |

**FURTHER INFORMATION CONTINUED FROM THE SECOND SHEET**

(Family: none)

Y    JP, A, 54-116258 (Nippon Aviotronics K.K.),      9, 10
September 10, 1979 (10. 09. 79),
(Family: none)

---

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers     , because they relate to subject matter not required to be searched by this Authority, namely:

2.☐ Claim numbers     , because they relate to parts of the international application that do not comply with the prescribed requirements to such an extent that no meaningful international search can be carried out, specifically:

3.☐ Claim numbers     , because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)